# EUROPEAN PATENT APPLICATION

(11) **EP 4 571 529 A1**
(43) Date of publication of application: **18.06.2025**
(21) Application number: 23851508.4
(22) Date of filing: 05.07.2023
(51) Int. Cl.: G06F 16/23, G06Q 10/06

(54) **AUTOMATIC TEST METHOD AND SYSTEM FOR INTELLIGENT COMMAND, MANAGEMENT AND CONTROL SYSTEM OF CONTAINER WHARF**

(30) Priority: 12.08.2022 CN 202210969782
(71) Applicant: Qingdao Port International Co., Ltd., Qingdao, Shandong 266000 (CN); Qingdao New Qianwan Container Terminal Co., Ltd., Qingdao, Shandong 266500 (CN)
(72) Inventor: LI, Yongcui, Qingdao, Shandong 266000 (CN); LI, Bo, Qingdao, Shandong 266000 (CN); CHEN, Qiang, Qingdao, Shandong 266000 (CN); LIU, Yaohui, Qingdao, Shandong 266000 (CN); ZHANG, Liangang, Qingdao, Shandong 266000 (CN); LIU, Rongrong, Qingdao, Shandong 266000 (CN); WANG, Xue, Qingdao, Shandong 266000 (CN); CHEN, Haiming, Qingdao, Shandong 266000 (CN); ZHANG, Xiao, Qingdao, Shandong 266000 (CN)
(74) Representative: Byrne, Declan
(86) International application number: PCT/CN2023/105821
(87) International publication number: WO 2024/032283

(57) **Abstract**

An automatic test method for an intelligent command, management and control system of a container wharf. The method comprises: presenting an attribute verification interaction interface (S101); determining whether a front-end element node verification request has been received (S102); if so, according to the front-end element node verification request, acquiring, from a front-end interface of a cache database that corresponds to a front-end element node, first verification data corresponding to the front-end element node verification request (S103); according to the front-end element node verification request, acquiring, from a system database of an operating system of a wharf, second verification data corresponding to a front-end node verification request (S104); presenting a front-end display interface corresponding to the front-end element node (S105); designating a display element node, which corresponds to the front-end element node, in the front-end display interface (S106); acquiring an attribute of the display element node so as to generate third verification data (S107); determining whether the first verification data, the second verification data and the third verification data are the same (S108); and if the first verification data, the second verification data and the third verification data are the same, determining that attribute verification is successful (S109). Therefore, the consistency of data of an operating system of a wharf can be ensured.

## Description

### Technical Field

The present invention pertains to the field of automated container terminals. More specifically, it relates to an automated testing method for an intelligent command and control system of a container terminal, as well as an automated testing system.

### Background

An automated container terminal represents an advanced logistics infrastructure designed to achieve fully automated control of container handling operations, encompassing lifting, stacking, loading, and unloading operations. The terminal's configuration comprises four sequential functional areas extending from the landside to the seaside: the gate interface, the container yard, the internal transfer vehicle operating zone, and the quay crane operating area. Container yard operations are systematically executed through coordinated interactions between Automated Guided Vehicles (AGVs), specialized container trucks, and rail-mounted gantry cranes.

The terminal operating system serves as the central management and scheduling platform, aggregating comprehensive information and physical parameters across the automated terminal infrastructure. This sophisticated system configures rail-mounted gantry cranes to interface with incoming container trucks at the landside interaction interface, automatically performing lifting or stacking operations based on predefined target positions. Within the stacking operation zone, containers are methodically arranged through automated processes. At the seaside interaction interface, the system dynamically coordinates with internal transfer vehicles to execute loading and unloading operations from the ships, referencing precise container stacking positions. Given the high-throughput nature of automated container terminals, the operating system typically implements a cache database methodology to optimize system performance and mitigate database server load, particularly in high-concurrency operational scenarios. However, the complex yard states and diverse container attributes introduce potential challenges, including potential data inconsistencies between cache and primary system databases. Unresolved data synchronization issues could significantly compromise terminal operational efficiency, potentially resulting in substantial economic implications and disrupted logistical workflows.

The information disclosed in this background section is only intended to provide contextual background and may include information that does not constitute prior art known to those skilled in the art.

### Summary

In order to address the issues in the terminal operating system of automated container terminals under high-concurrency scenarios, such as data loss (including container yard status and container attributes), and inconsistencies between the cache database and the system database, which, if not promptly identified, can interfere with the entire automated terminal operation process, reduce loading and unloading efficiency, or lead to erroneous manual interventions, a first aspect of the present invention provides an automated testing method for an intelligent command and control system of a container terminal.

The automated testing method for an intelligent command and control system of a container terminal includes the following steps:
displaying an attribute verification interaction interface; wherein the attribute verification interaction interface is configured to input one or more front-end element node verification requests, with each front-end element node verification request corresponding to a front-end element node; wherein the front-end element nodes include: one or more container attributes, and/or one or more vehicle attributes, and/or one or more spreader attributes;
determining whether at least one front-end element node verification request is received;
if a front-end element node verification request is received, then based on the front-end element node verification request, obtaining a first verification data corresponding to the front-end element node verification request from the cache database through a front-end interface associated with the front-end element node;
based on the front-end element node verification request, obtaining a second verification data corresponding to the front-end element node verification request from the system database of a terminal operating system;
displaying a front-end display interface corresponding to the front-end element node;
specifying a display element node in the front-end display interface corresponding to the front-end element node;
obtaining an attribute of the display element node to generate a third verification data;
determining whether the first verification data, the second verification data, and third verification data are the same;
if yes, the attribute verification is considered successful.

The second aspect of the present invention provides an automated testing system for an intelligent command and control system of a container terminal.

The automated testing system for an intelligent command and control system of a container terminal includes:
a first display module configured to display an attribute verification interaction interface, wherein the attribute verification interaction interface is configured to input one or more front-end element node verification requests, with each front-end element node verification request corresponding to a front-end element node; wherein the front-end element nodes include: one or more container attributes, and/or one or more vehicle attributes, and/or one or more spreader attributes;
a first determination module configured to determine whether at least one front-end element node verification request is received;
a first obtaining module configured to, after the first determination module determines that at least one front-end element node verification request is received, obtain a first verification data corresponding to the front-end element node verification request from the cache database through a front-end interface associated with the front-end element node based on the front-end element node verification request;
a second obtaining module configured to, after the first determination module determines that at least one front-end element node verification request is received, obtain a second verification data corresponding to the front-end element node verification request from the system database of the terminal operating system based on the front-end element node verification request;
a second display module configured to, after the first determination module determines that at least one front-end element node verification request is received, display the front-end display interface corresponding to the front-end element node;
a specification module configured to specify a display element node in the front-end display interface corresponding to the front-end element node;
a third obtaining module configured to obtain an attribute of the display element node to generate a third verification data; and
a second determination module, configured to determine whether the first verification data, the second verification data, and the third verification data are the same; if yes, the attribute verification is considered successful.

Compared with the prior art, the advantages and positive effects of the present invention are:

The automated testing method for an intelligent command and control system of a container terminal provided by the present invention offers an automated testing approach to enable one-click detection of complex container attributes, vehicle attributes, and spreader attributes within automated terminals. It accurately and efficiently identifies data inconsistencies, ensuring data consistency among the cache database, front-end display interface, and system database under high-concurrency scenarios. This method promptly identifies data loss, thereby avoiding inconsistencies between the cache database and the system database, and prevent disruptions to the automated terminal operation process that could reduce loading and unloading efficiency. Additionally, it prevents the front-end display interface from displaying erroneous data, which could otherwise lead to incorrect manual interventions. The automated testing method for the intelligent command and control system of a container terminal provided by the present invention can enhance the operational stability of automated container terminals.

After reading the specific embodiments of the present invention in conjunction with the drawings, other features and advantages of the present invention will become more apparent.

### Brief Description of the Drawings

In order to more clearly illustrate the technical solutions in the embodiments of the present invention, the following provides a brief introduction to the drawings associated with these embodiments. It should be noted that the drawings described below represent merely some embodiments of the present invention. Those skilled in the art are capable of deriving additional drawings from these drawings without the need for inventive effort.
Figure 1 presents a flowchart of the first embodiment of the automated testing method for an intelligent command and control system of a container terminal, as provided by the present invention.
Figure 2 presents a flowchart of partial steps of the second embodiment of the automated testing method for an intelligent command and control system of a container terminal, as provided by the present invention.
Figure 3 presents a flowchart of partial steps of the third embodiment of the automated testing method for an intelligent command and control system of a container terminal, as provided by the present invention.
Figure 4 presents a structural diagram of the first embodiment of the automated testing system for an intelligent command and control system of a container terminal, as provided by the present invention.
Figure 5 presents a structural diagram of the second embodiment of the automated testing system for an intelligent command and control system of a container terminal, as provided by the present invention.

### Detailed Description

To make the objectives, technical solutions, and advantages of the present invention clearer, the following provides a more detailed description of the invention with reference to the drawings and embodiments.

It should be noted that in the description of the present invention, the terms "up," "down," "left," "right," "vertical," "horizontal," "inner," "outer," and other directional or positional relationship terms are based on the directions or positional relationships shown in the drawings. These terms are used for convenience of description and do not imply or suggest that the device or elements must have a specific orientation, be constructed and operated in a specific orientation, and thus should not be understood as limiting the present invention. Furthermore, the terms "first," "second," etc., are used for descriptive purposes only and should not be understood as indicating or implying relative importance.

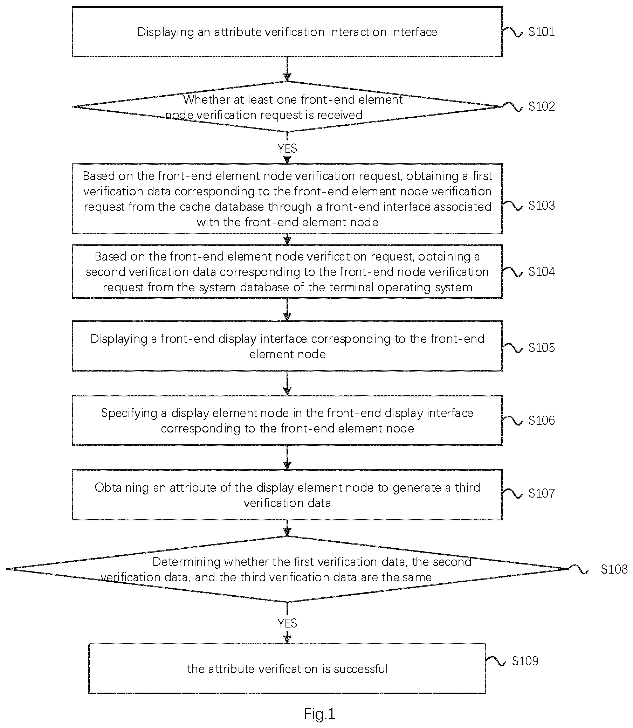

In response to the challenges encountered in a terminal operating system of automated container terminals under high-concurrency scenarios, such as data loss (including container yard status and container attributes) and discrepancies between the cache database and the system database, which, if not promptly addressed, may disrupt the entire automated terminal operation process, result in erroneous manual interventions, and diminish loading and unloading efficiency, one embodiment of the present invention introduces an automated testing method for an intelligent command and control system of a container terminal, comprising steps as illustrated in Figure 1.

Step S101: Displaying an attribute verification interaction interface.

The attribute verification interaction interface enables users (typically the operator) to input one or more front-end element node verification requests. It is preferably configured on a server, a computer capable of executing one or more software applications that are part of a terminal operating system, or other intelligent devices with similar functionality. The verification interaction interface includes button elements, input boxes, or other similar widgets to receive the user's input of the front-end element node verification request. The terminal operating system includes a system database and a cache database to handle high-concurrency system requirements. The intelligent command and control system for a container terminal can be a subsystem of the terminal operating system or an independent system.

A front-end element node verification request corresponds to a front-end element node. The front-end element nodes include: one or more container attributes, and/or one or more vehicle attributes, and/or one or more spreader attributes. For example, the operator can generate a first front-end element node verification request through a first button element to verify a container attribute, or generate a second front-end element node verification request through a second button element to verify a vehicle attribute, or generate a third front-end element node verification request through a third button element to verify a spreader attribute.

The following provides an exemplary introduction to the operation of an automated container terminal. The terminal's configuration comprises functional areas sequentially extending from the landside to the seaside: a gate interface, a container yard, an internal transfer vehicle operating zone, and a quay crane operating area. The gate interface determines whether external transport vehicles, typically container trucks, are allowed to enter or leave the container yard. The gate interface verifies various parameters of entering and exiting vehicles and containers, including but not limited to the vehicle's physical license plate number, the electronic license plate number, the container number, the container type, the number of containers, the position of the container on the chassis, the door orientation, whether the container is damaged, the driver's identity (via RFID), the vehicle weight, and the like. The container yard comprises multiple parallel sub-yards, each systematically organized from the landside to the seaside, comprising: a land-side interaction area, a stacking operation area, and a sea-side interaction area. Rail-mounted gantry cranes traverse the sub-yards, moving back and forth along the length of the sub-yards, performing container lifting, stacking, and positioning containers at designated locations. The rail-mounted gantry cranes typically include a land-side rail-mounted gantry crane and a sea-side rail-mounted gantry crane. For example, if the land-side rail-mounted gantry crane receives a stacking task, it moves to the target position with an empty spreader, picks up a container from an external transport vehicle, and places the container in a predetermined stacking position. In the sea-side interaction area, the sea-side rail-mounted gantry crane interacts with the Automated Guided Vehicles (AGVs, internal transfer vehicles). Specifically, the sea-side rail-mounted gantry crane retrieves a container designated for ship loading from the container yard and places it at a target position. Subsequently, an internal transfer vehicle automatically drives to the specified position, lifts the container from underneath, traverses through the internal transfer vehicle operating zone until it transfers the container to the quay crane operating area, where the quay crane loads the container from the AGV onto the ship.

From the exemplary operational workflow of the automated container terminal described above, it is evident that the automated control substantially relies on sensor detection data and the comparison results of target data retrieved from the system database and/or cache database. For instance, this includes: verifying the identity of containers and vehicles, confirming whether the spreader has reached the target position, and checking whether container trucks or AGVs have reached the target position. Operators make judgments based on the data displayed on the front-end interface of the terminal operating system and perform active intervention control. However, when the system database and/or cache database contain inaccuracies, or when the front-end display interfaces present incorrect information, there is a substantial risk of control errors. To ensure that the data across the system database, cache database, and display are the same and correct, the attribute verification method for the automated terminal provided by the present invention can automatically verify any front-end element node. It is easy to understand that multiple front-end element nodes can also be automatically verified in sequence, providing operators the flexibility to selectively initiate verification of one or more element nodes as required.

Step S102: Determining whether at least one front-end element node verification request is received.

Step S103: If a front-end element node verification request is received, then based on the front-end element node verification request, obtaining a first verification data corresponding to the front-end element node verification request from the cache database through a front-end interface associated with the front-end element node.

Step S104: Concurrently, if a front-end element node verification request is received, then based on the front-end element node verification request, obtaining a second verification data corresponding to the front-end element node verification request from the system database of the terminal operating system.

Step S105: Displaying a front-end display interface corresponding to the front-end element node.

Step S106: Automatically specifying a display element node in the front-end display interface corresponding to the front-end element node.

Step S107: Obtaining an attribute of the display element node to generate a third verification data.

To further illustrate the above steps, consider an example where the front-end element node is one of container attributes. The container attributes include: category attribute (storage in or retrieval out), release attribute, discharge port attribute, dangerous goods container attribute, oversized container attribute, tank container attribute, container type attribute, high cube container attribute, reefer container attribute, movement prohibition attribute, and bay allocation attribute.

Based on the front-end element node verification request, the first verification data corresponding to the front-end element node verification request is obtained from the cache database via the front-end interface associated with the front-end element node. This process involves using a read command to access the container attribute data (e.g., the relevant bit in the control command) from the cache database, which serves as the first verification data.

Obtaining the second verification data corresponding to the front-end element node verification request from the system database of the terminal operating system based on the front-end element node verification request can include the following steps:
Invoking a filtering algorithm to filter out all containers present in the container yard from the system database and obtain the container attributes of all present containers one by one, so as to further generate the second verification data corresponding to the front-end element node verification request. "Present containers" refer to containers in any sub-yard within the container yard. The filtering algorithm can be a mature filtering algorithm from the prior art, which is not the focus of this invention and will not be further introduced here.

Displaying the front-end display interface corresponding to the front-end element node involves, presenting the front-end display interface generated and shown by the terminal operating system during normal operation, which corresponds to the container yard. This interface can showcase any one of the front-end element nodes within the container yard, such as the container attributes of the currently present containers, which can be accessed through direct display, clicking, or hovering. The front-end display interface may take the form of a bay view window. In this embodiment, the Selenium framework is utilized to designate each currently present container as the corresponding display element node in the front-end display interface, and a front-end category attribute of each display element node is obtained, so as to further generate the third verification data corresponding to the front-end element node verification request. In this step, Selenium, as an element manipulation tool, simulates manual operations to automatically obtain the container attributes of the currently present containers as display element nodes and uses the obtained front-end category attribute of each display element node as the third verification data. The entire process is automated and requires no manual intervention.

Step S108: Determining whether the first verification data, the second verification data, and the third verification data are the same. For example, first, comparing the front-end display interface with the database by checking if the second verification data and the third verification data are the same, and identifying any discrepancies. Next, comparing the cache database with the front-end display interface by checking if the first verification data aligns with the third verification data. This includes attributes such as the container's release attribute, category attribute (e.g., storage in or retrieval out), and bay allocation attribute, and identifying any inconsistencies.

Step S109: If all verification data are the same, the attribute verification is considered successful. This indicates that the display attribute, the front-end database and the back-end database are well-aligned, and the data interaction is accurate. This consistency ensures the smooth execution of subsequent related control processes in the automated terminal.

The automated testing method for the intelligent command and control system of a container terminal, as provided by the present invention, is an attribute verification method designed for automated terminals. This method offers an automated testing approach to enable one-click detection of complex container attributes, vehicle attributes, and spreader attributes within automated terminals. It accurately and efficiently identifies data inconsistencies, ensuring data consistency among the cache database, front-end display interface, and system database under high-concurrency scenarios. This method promptly identifies data loss, thereby avoiding inconsistencies between the cache database and the system database, and prevents disruptions to the automated terminal operation process that could reduce loading and unloading efficiency. Additionally, it prevents the front-end display interface from displaying erroneous data, which could otherwise lead to incorrect manual interventions. The automated testing method for the intelligent command and control system of a container terminal provided by the present invention can enhance the operational stability of automated container terminals.

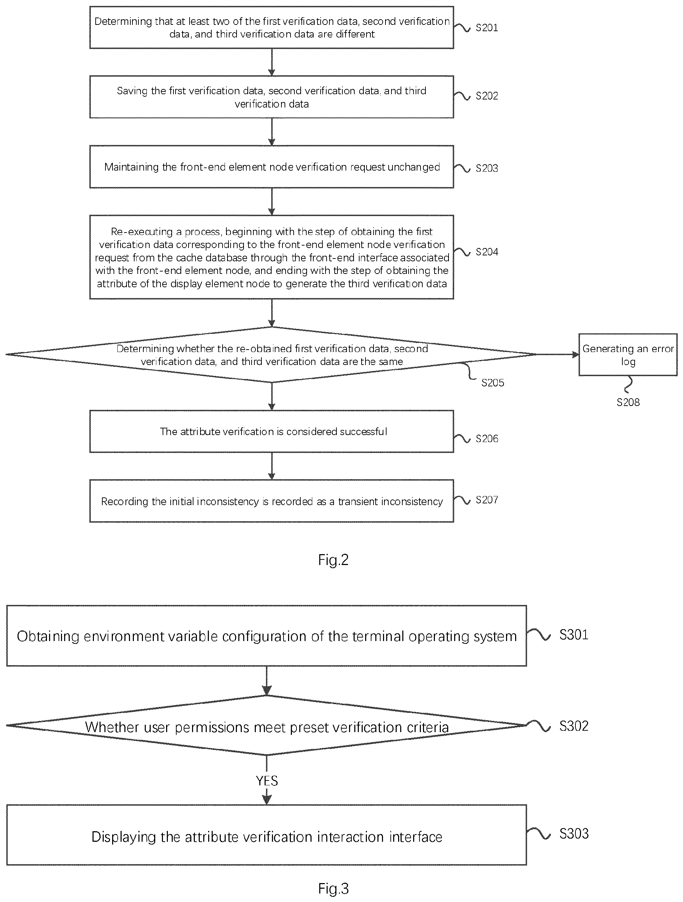

Referring to Figure 2, a preferred embodiment of the present invention further discloses a handling method when at least two of the first verification data, second verification data, and third verification data are different.

Step S201: Determining that at least two of the first verification data, second verification data, and third verification data are different. For example, the release attribute of a container in the same bay may differ across the system database, cache database, and front-end display interface, with one indicating "allowed to release" and the other two indicating "not allowed to release." This discrepancy can be reflected in the varying values of the corresponding flag bits in the first verification data, second verification data, and third verification data.

Step S202: Saving the first verification data, second verification data, and third verification data.

Step S203: Maintaining the front-end element node verification request unchanged.

Step S204: Re-executing a process, beginning with the step of obtaining the first verification data corresponding to the front-end element node verification request from the cache database through the front-end interface associated with the front-end element node, and ending with the step of obtaining the attribute of the display element node to generate the third verification data.

Step S205: Determining whether the re-obtained first verification data, second verification data, and third verification data are the same.

Step S206: If the re-obtained first verification data, second verification data, and third verification data are the same, then the attribute verification is considered successful, and the initial inconsistency is recorded as a transient inconsistency, as shown in Step S207.

In an embodiment, the number of transient inconsistencies is accumulated. If the accumulated count of transient inconsistencies exceeds a predefined threshold within a specified detection period, it indicates that the current update cycle of the cache database is unreasonable. This situation arises when the data in the system database has not been updated in the cache database during data retrieval. Therefore, in a preferred embodiment, if the accumulated number of transient inconsistencies surpasses the set threshold, a step of automatically adjusting the current update cycle of the cache database is executed. During the subsequent detection period, it is determined whether the accumulated number of transient inconsistencies is greater than the set threshold. If the accumulated number of transient inconsistencies is less than the set threshold, the adjusted update cycle of the cache database is considered reasonable, and the cache database is updated according to the adjusted update cycle in further operations, achieving automatic system correction. If the accumulated number of transient inconsistencies continues to exceed the threshold, the update cycle of the cache database is adjusted again until the accumulated number of transient inconsistencies falls below the set threshold. When adjusting the current update cycle of the cache database, a predefined time increment can be utilized, with the new update cycle calculated as the sum of the original update cycle and the time increment. The time increment can be either a positive or negative value.

Step S208: If at least two of the re-obtained first verification data, second verification data, and third verification data are different, generating an error log to prompt the operator to conduct a thorough investigation and resolution.

In a preferred embodiment, after generating the error log, the following steps are implemented: prohibiting one or more control processes based on the front-end element node until the re-obtained first verification data, the re-obtained second verification data, and the re-obtained third verification data are the same. For example, if the release attribute of a container in the same bay differs across the system database, cache database, and front-end display interface, where one is "allowed to release" and the other two are "not allowed to release," temporarily prohibiting storage and retrieval operations for that bay. This prohibition remains in effect until manual intervention reconciles the first verification data, second verification data, and third verification data, allowing them to align. At that point, the prohibition will be lifted.

In a preferred embodiment, the automated testing method for the intelligent command and control system of a container terminal provided by the present invention can be adapted to various terminal operating systems. Specifically, as shown in Step S301 to S303 in Figure 3, the following steps may be included before displaying the attribute verification interaction interface: obtaining environment variable configuration of the terminal operating system; assessing whether user permissions meet preset verification criteria; if they do, displaying the attribute verification interaction interface to facilitate user interaction (typically the operator) and receiving the user's input of front-end element node verification requests. Conversely, if the user's permissions do not meet the criteria, interaction with the user (typically the operator) will be prohibited.

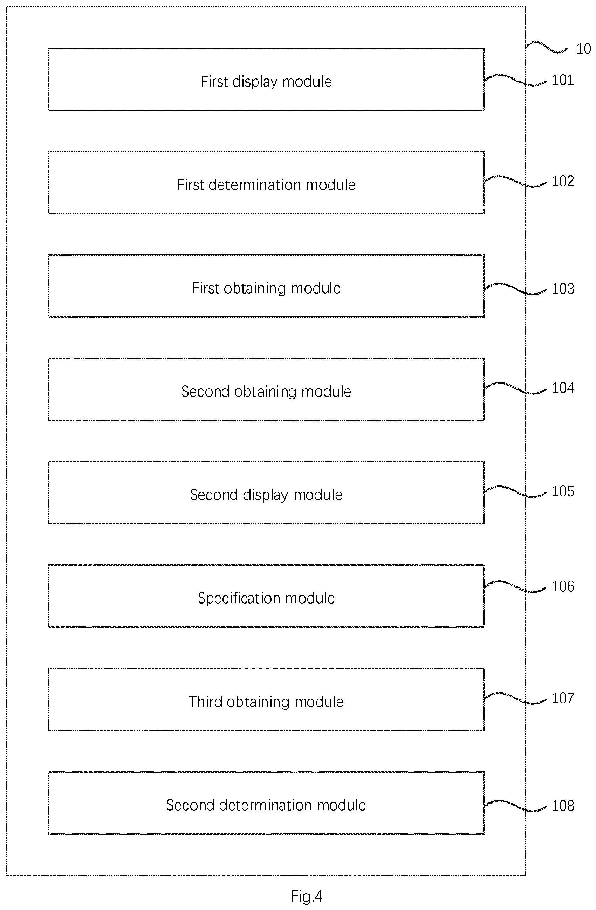

The second aspect of the present invention provides an automated testing system for an intelligent command and control system of a container terminal. As shown in Figure 4, the automated testing system for an intelligent command and control system of a container terminal includes:
A first display module 101, configured to display an attribute verification interaction interface. The attribute verification interaction interface is configured to input front-end element node verification requests. A front-end element node verification request corresponds to a front-end element node, which includes: one or more container attributes, and/or one or more vehicle attributes, and/or one or more spreader attributes.

A first determination module 102, configured to determine whether at least one front-end element node verification request is received.

A first obtaining module 103, configured to, after the first determination module 102 determines that at least one front-end element node verification request is received, obtain a first verification data corresponding to the front-end element node verification request from the cache database through a front-end interface associated with the front-end element node based on the front-end element node verification request.

A second obtaining module 104, configured to, after the first determination module 102 determines that at least one front-end element node verification request is received, obtain a second verification data corresponding to the front-end element node verification request from the system database of the terminal operating system based on the front-end element node verification request.

A second display module 105, configured to, after the first determination module 102 determines that at least one front-end element node verification request is received, display the front-end display interface corresponding to the front-end element node.

A specification module 106, configured to specify a display element node in the front-end display interface corresponding to the front-end element node.

A third obtaining module 107, configured to obtain an attribute of the display element node to generate a third verification data.

A second determination module 108, configured to determine whether the first verification data, second verification data, and third verification data are the same; if they are the same, then the attribute verification is considered successful.

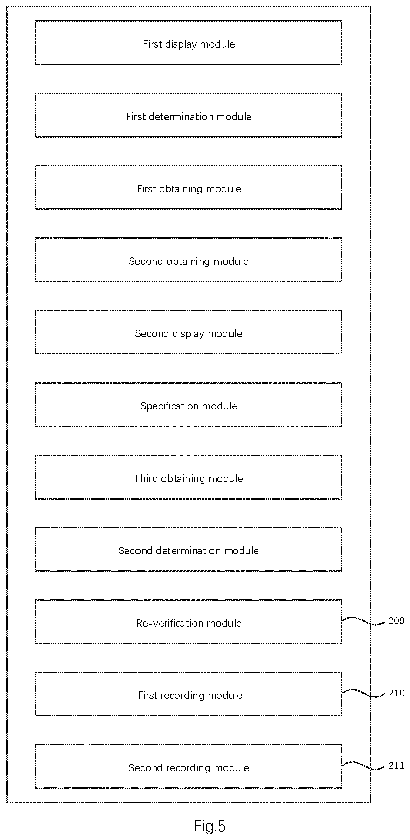

As shown in Figure 5, in a preferred embodiment, the automated testing system for an intelligent command and control system of a container terminal further includes:
A re-verification module 209, configured to, when the second determination module 108 determines that at least two of the first verification data, second verification data, and third verification data are different, save the first verification data, second verification data, and third verification data and maintain the front-end element node verification request unchanged; then, re-execute the process, beginning with the step of obtaining the first verification data corresponding to the front-end element node verification request from the cache database through the front-end interface associated with the front-end element node, and ending with the step of obtaining the attribute of the display element node to generate the third verification data; determine whether the re-obtained first verification data, second verification data, and third verification data are the same; if the re-obtained first verification data, second verification data, and third verification data are the same, then consider the attribute verification successful.

A first recording module 210, configured to record the initial inconsistency as a transient inconsistency when the re-verification module 209 determines that the re-obtained first verification data, second verification data, and third verification data are the same.

A second recording module 211, configured to generate and record an error log when the re-verification module 209 determines that at least two of the re-obtained first verification data, second verification data, and third verification data are different.

In a preferred embodiment, the automated testing system for an intelligent command and control system of a container terminal further includes: a disable module, configured to, after the second recording module 211 generates and records the error log, prohibit the control process associated with the front-end element node until the updated first verification data, second verification data, and third verification data are the same.

In a preferred embodiment, the front-end element node is a container attribute. Container attributes include one or more of the following: category attribute, release attribute, discharge port attribute, dangerous goods container attribute, oversized container attribute, tank container attribute, container type attribute, high cube container attribute, reefer container attribute, movement prohibition attribute, and bay allocation attribute.

The second obtaining module 104 is configured to invoke a filtering algorithm to filter out all containers present in the container yard from the system database and obtain the container attributes of all present containers, so as to further generate the second verification data corresponding to the front-end element node verification request.

The third obtaining module 107 is configured to use the Selenium framework to designate each currently present container as the corresponding display element node in the front-end display interface, and the front-end category attribute of each display element node is obtained, so as to generate the third verification data corresponding to the front-end element node verification request.

In a preferred embodiment, the system for automated testing of an intelligent command and control system of a container terminal further includes: a permission verification module, configured to obtain the environment variable configuration of the terminal operating system; and assess whether the user's permissions meet the established verification criteria. If they do, the attribute verification interaction interface is displayed.

This application also provides a computer storage medium. The computer storage medium stores a computer program for electronic data exchange, which causes the computer to execute part or all of the steps of any method described in the above method embodiments.

In the above embodiments, the descriptions of each embodiment have their own focus. For parts not described in detail in one embodiment, reference may be made to the relevant descriptions of other embodiments.

In the several embodiments provided in this application, it should be understood that the disclosed system can be implemented in other ways. For example, the above-described system embodiments are merely illustrative, and the division of the units or modules is only one possible example. In actual implementations, other divisions are possible. For instance, multiple units or components may be combined or integrated into another system, or some features may be omitted or not executed. Additionally, the mutual coupling or direct coupling or communication connections shown or discussed may be indirect couplings or communication connections through some interfaces, devices, or units, and may be electrical or other forms.

The units described as separate components may or may not be physically separate, and the components displayed as units may or may not be physical units, i.e., they may be located in one physical space, or they may be distributed across multiple network units. Some or all of the units may be selected according to actual needs to achieve the objectives of the embodiments.

Furthermore, in the embodiments of the present application, each functional unit may be integrated into one processing unit, or each unit may exist separately, or two or more units may be integrated into one unit. The above-integrated units can be implemented in the form of hardware or software functional units.

The above embodiments are only used to illustrate the technical solutions of the present invention and are not intended to limit them. Although the present invention is described in detail with reference to the foregoing embodiments, those skilled in the art should understand that they can still modify the technical solutions described in the foregoing embodiments, or equivalently replace some of the technical features. These modifications or replacements do not make the essence of the corresponding technical solutions deviate from the spirit and scope of the technical solutions of the embodiments of the present invention.

## Claims

1. An automated testing method for an intelligent command and control system of a container terminal, **characterized by** comprising:
displaying an attribute verification interaction interface; wherein the attribute verification interaction interface is configured to input one or more front-end element node verification requests, with each front-end element node verification request corresponding to a front-end element node; wherein the front-end element nodes include: one or more container attributes, and/or one or more vehicle attributes, and/or one or more spreader attributes;
determining whether at least one front-end element node verification request is received;
if a front-end element node verification request is received, then based on the front-end element node verification request, obtaining a first verification data corresponding to the front-end element node verification request from the cache database through a front-end interface associated with the front-end element node;
based on the front-end element node verification request, obtaining a second verification data corresponding to the front-end element node verification request from the system database of a terminal operating system;
displaying a front-end display interface corresponding to the front-end element node;
specifying a display element node in the front-end display interface corresponding to the front-end element node;
obtaining an attribute of the display element node to generate a third verification data;
determining whether the first verification data, the second verification data, and third verification data are the same;
if yes, the attribute verification is considered successful.

2. The automated testing method for an intelligent command and control system of a container terminal according to claim 1, **characterized by** comprising the following steps after determining whether the first verification data, the second verification data, and the third verification data are the same:
if at least two of the first verification data, the second verification data, and the third verification data are different, saving the first verification data, the second verification data,
and the third verification data;
maintaining the front-end element node verification request unchanged;
re-executing a process that begins with the step of obtaining the first verification data corresponding to the front-end element node verification request from the cache database through the front-end interface associated with the front-end element node, and ends with the step of obtaining the attribute of the display element node to generate the third verification data;
determining whether a re-obtained first verification data, a re-obtained second verification data, and a re-obtained third verification data are the same;
if the re-obtained first verification data, the re-obtained second verification data, and the re-obtained third verification data are the same, then the attribute verification is considered successful, and the initial inconsistency is recorded as a transient inconsistency;
if at least two of the re-obtained first verification data, the re-obtained second verification data, and the re-obtained third verification data are different, generating an error log.

3. The automated testing method for an intelligent command and control system of a container terminal according to claim 2, **characterized by** comprising the following steps after generating the error log:
prohibiting one or more control processes based on the front-end element node until the re-obtained first verification data, the re-obtained second verification data, and the re-obtained third verification data are the same.

4. The automated testing method for an intelligent command and control system of a container terminal according to any one of claims 1 to 3, **characterized in that**, the front-end element node is one of container attributes, and the container attributes include: category attribute, release attribute, discharge port attribute, dangerous goods container attribute, oversized container attribute, tank container attribute, container type attribute, high cube container attribute, reefer container attribute, movement prohibition attribute, and bay allocation attribute;
the step of, based on the front-end element node verification request, obtaining a second verification data corresponding to the front-end element node verification request from the system database of the terminal operating system includes:
invoking a filtering algorithm to filter out containers present in the container yard from the system database and obtain the container attributes of the present containers one by one, to further generate the second verification data;
the steps of specifying a display element node in the front-end display interface corresponding to the front-end element node and obtaining an attribute of the display element node to generate a third verification data include:
utilizing the Selenium framework to designate each present container as the corresponding display element node in the front-end display interface, and obtaining a front-end category attribute of each display element node to generate the third verification data.

5. The automated testing method for an intelligent command and control system of a container terminal according to claim 4, **characterized by** comprising the following steps before displaying the attribute verification interaction interface:
obtaining environment variable configuration of the terminal operating system;
assessing whether user permissions meet preset verification criteria;
if yes, displaying the attribute verification interaction interface.

6. An automated testing system for an intelligent command and control system of a container terminal, **characterized by** comprising:
a first display module configured to display an attribute verification interaction interface, wherein the attribute verification interaction interface is configured to input one or more front-end element node verification requests, with each front-end element node verification request corresponding to a front-end element node; wherein the front-end element nodes include: one or more container attributes, and/or one or more vehicle attributes, and/or one or more spreader attributes;
a first determination module configured to determine whether at least one front-end element node verification request is received;
a first obtaining module configured to, after the first determination module determines that at least one front-end element node verification request is received, obtain a first verification data corresponding to the front-end element node verification request from the cache database through a front-end interface associated with the front-end element node based on the front-end element node verification request;
a second obtaining module configured to, after the first determination module determines that at least one front-end element node verification request is received, obtain a second verification data corresponding to the front-end element node verification request from the system database of the terminal operating system based on the front-end element node verification request;
a second display module configured to, after the first determination module determines that at least one front-end element node verification request is received, display the front-end display interface corresponding to the front-end element node;
a specification module configured to specify a display element node in the front-end display interface corresponding to the front-end element node;
a third obtaining module configured to obtain an attribute of the display element node to generate a third verification data; and
a second determination module, configured to determine whether the first verification data, the second verification data, and the third verification data are the same; if yes, the attribute verification is considered successful.

7. The automated testing system for an intelligent command and control system of a container terminal according to claim 6, **characterized by** comprising:
a re-verification module configured to, when the second determination module determines that at least two of the first verification data, the second verification data, and the third verification data are different, save the first verification data, the second verification data, and the third verification data and maintain the front-end element node verification request unchanged; re-execute a process that begins with the step of obtaining the first verification data corresponding to the front-end element node verification request from the cache database through the front-end interface associated with the front-end element node, and ends with the step of obtaining the attribute of the display element node to generate the third verification data; and determine whether the re-obtained first verification data, the re-obtained second verification data, and the re-obtained third verification data are the same; if yes, to determine the attribute verification is successful;
a first recording module, configured to record the initial inconsistency as a transient inconsistency when the re-verification module determines that the re-obtained first verification data, the re-obtained second verification data, and the re-obtained third verification data are the same; and
a second recording module, configured to generate and record an error log when the re-verification module determines that at least two of the re-obtained first verification data, the re-obtained second verification data, and the re-obtained third verification data are different.

8. The automated testing system for an intelligent command and control system of a container terminal according to claim 7, **characterized by** comprising:
a disable module configured to, after the second recording module generates and records the error log, prohibit the control process associated with the front-end element node until the re-obtained first verification data, the re-obtained second verification data, and the re-obtained third verification data are the same.

9. The automated testing system for an intelligent command and control system of a container terminal according to any one of claims 6 to 8, **characterized in that**:
the front-end element node is one of container attributes, and the container attributes include: category attribute, release attribute, discharge port attribute, dangerous goods container attribute, oversized container attribute, tank container attribute, container type attribute, high cube container attribute, reefer container attribute, movement prohibition attribute, and bay allocation attribute;
the second obtaining module is configured to invoke a filtering algorithm to filter out containers present in the container yard from the system database and obtain the container attributes of the present containers one by one, to further generate the second verification data;
the third obtaining module is configured to utilize the Selenium framework to designate each present container as the corresponding display element node in the front-end display interface, and obtain a front-end category attribute of each display element node to generate the third verification data.

10. The automated testing system for an intelligent command and control system of a container terminal according to claim 9, **characterized by** including:
a permission verification module, configured to obtain environment variable configuration of the terminal operating system; assess whether user permissions meet established verification criteria; if yes, to display the attribute verification interaction interface.
